Europäisches Patentamt

European Patent Office

Office européen des brevets

(19)

(11) Numéro de publication: **0 154 616**

**A2**

(12)

# DEMANDE DE BREVET EUROPEEN

(21) Numéro de dépôt: 85870033.9

(22) Date de dépôt: 28.02.85

(51) Int. Cl.⁴: **B 23 D 21/08**

(30) Priorité: 29.02.84 BE 899032

(43) Date de publication de la demande:
11.09.85 Bulletin 85/37

(84) Etats contractants désignés:
DE FR GB IT

(71) Demandeur: Buchholz, Fernand
Hedomont 14c
B-4891 Malmedy(BE)

(71) Demandeur: Laurent, Adolphe
Dairomont 2
B-6698 Grand Halleux(BE)

(72) Inventeur: Buchholz, Fernand
Hedomont 14c
B-4891 Malmedy(BE)

(72) Inventeur: Laurent, Adolphe
Dairomont 2
B-6698 Grand Halleux(BE)

(74) Mandataire: Kellens, Georges E.
c/o BUGNION S.A. rue de Namur 43 -Bte 3
B-1000 Bruxelles(BE)

(54) Perfectionnements apportés aux coupe-tubes.

(57) On décrit un coupe-tube perfectionné qui comporte deux appuis sensiblement opposés (3,5) à écartement réglable, dont le premier appui (3) est muni d'une roulette de chanfreinage (7) et d'une roulette de coupe (9) situées l'une en-dessous de l'autre, et dont le deuxième appui (5) est muni de deux galets d'appui parallèles (13,11). Les roulettes sont montées sur un étrier commun (25) monté de manière pivotante sur le support (1).

EP 0 154 616 A2

- 1 -

## PERFECTIONNEMENTS APPORTES AUX COUPE-TUBES.

La présente invention concerne un perfectionnement à un coupe-tube. On connaît déjà des coupe-tubes généralement utilisés par les chauffagistes ou par les plombiers pour couper à longueur adéquate les tubes en un matériau relativement tendre, mais rigide, généralement en cuivre, notamment en cuivre rouge. De tels coupe-tubes de type connu consistent en un support comportant deux appuis sensiblement opposés, à écartement réglable, dont un premier appui est muni d'une roulette de coupe et dont le deuxième appui est muni d'au moins un galet d'appui, le tube à couper étant serré entre le ou les galets d'appui et la roulette de coupe de telle sorte que la rotation du tube autour de son axe permette l'action de la roulette de coupe qui est introduite de plus en plus profondément dans la paroi extérieure du tube par le rapprochement des appuis opposés, jusqu'à ce que ledit tube soit sectionné.

Bien que ce dispositif ait trouvé une large application dans le domaine de la plomberie au sens le plus large, il présente des inconvénients. Le point d'application de la roulette de coupe et les galets d'appui du tube sont difficilement réglables l'un par rapport à l'autre pour les différentes dimensions de tubes à couper. La coupe d'un tube en matériau tendre ou dur, provoque généralement des bordures blessantes qui rendent difficile l'emboîtement de l'extrémité sectionnée dans un tube femelle correspondant ou provoquent tout au moins des défauts d'étanchéité lors d'un tel emboîtement.

Le but de la présente invention vise donc essentiellement à fournir un coupe-tube perfectionné qui ne présente pas les inconvénients précités et qui permet d'obtenir une extrémité de tube sectionné présentant une finition satisfaisante qui évite les blessures par la présence de bordures et qui facilite l'emboîtement de l'extrémité du tube sectionné dans un élément correspondant. D'autres buts et avantages de la présente invention apparaîtront aux spécialistes à la lecture de la description qui suit.

- 2 -

Le but de la présente invention est atteint par un coupe-tube consistant en un support qui comporte deux appuis sensiblement opposés, à écartement réglable, caractérisé en ce que le premier appui est muni d'une roulette de chanfreinage et d'une roulette de coupe, les deux roulettes étant disposées l'une en-dessous de l'autre, et en ce que le deuxième appui est muni d'un ou de deux galets d'appui parallèles dont les axes sont substantiellement parallèles aux axes des roulettes de chanfreinage et de coupe.

Le dispositif selon la présente invention permet ainsi d'obtenir une finition satisfaisante de l'extrémité du tube sectionné, en y effectuant, en même temps que la coupe, un chanfrein adéquat qui ne comporte plus de bordures blessantes et qui facilite l'emboîtement dans un élément correspondant, tel qu'un coude, un raccord en forme de T ou un segment de tube dont une extrémité est élargie.

Selon une forme d'exécution préférentielle de la présente invention, les roulettes de chanfreinage et de coupe sont montées sur un même étrier assemblé de manière pivotante avec ledit premier appui. De cette manière, les deux roulettes prennent une position adéquate par rapport aux galets d'appui, lors de l'utilisation du dispositif de l'invention pour la coupe de tubes. Cette forme d'exécution permet un sectionnement de tube dans les meilleures conditions et évite tout blocage.

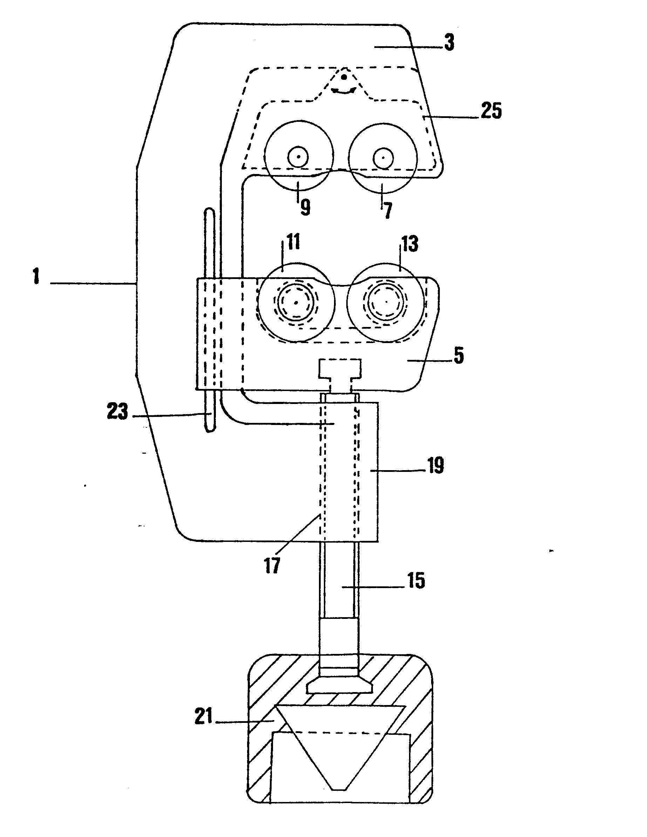

D'autres détails et avantages du dispositif de la présente invention apparaîtront plus clairement à la lecture de la description d'une forme d'exécution préférée, à l'appui de la figure annexée. Il faut noter que celle-ci n'est donnée qu'à titre d'exemple non limitatif et qu'elle ne vise nullement à limiter la portée de la présente invention, qui est définie, notamment, par les revendications jointes.

En référence à la figure, le dispositif consiste en un support 1 affectant globalement la forme d'un U. Le support 1 comporte deux appuis 3,5 dont le premier appui 3, solidaire du support 1, est muni d'une roulette de chanfrei-

- 3 -

nage 7 et d'une roulette de coupe 9, ou inversement, et dont le deuxième appui 5, mobile, comporte deux galets d'appui 11 et 13. On constate facilement que les axes des galets d'appui sont parallèles aux axes des roulettes 7, 9.

Etant donné que l'appui 3 est solidaire du support 1, l'écartement entre l'appui 3 et l'appui 5 peut être réglé au moyen d'une tige filetée 15 fixée d'une part à l'appui mobile 5 et tournant d'autre part dans un taraudage 17 pratiqué dans la branche 19 du U, opposée à la branche 3 qui constitue le premier appui 3. En faisant tourner la tige filetée 15 au moyen de la poignée 21 dans un sens ou dans l'autre, on rapproche ou on écarte avantageusement l'appui mobile 5 du premier appui 3.

De préférence, l'appui 5 est avantageusement guidé dans son mouvement rectiligne par un guide coulissant, par exemple, dans une rainure 23, qui est creusée dans le support en U 1 et qui permet de maintenir les roulettes perpendiculairement au plan longitudinal du tube à couper.

Selon une forme d'exécution préférée, les roulettes de chanfreinage 7 et de coupe 9 sont montées sur un étrier 25 assemblé de manière pivotante avec l'appui fixe 3. De cette manière, le dispositif de l'invention s'adapte automatiquement aux dimensions de tubes à couper, de préférence les tubes de diamètre compris entre 8 et 28 millimètres.

La forme des roulettes de chanfreinage 7 et de coupe 9 dépend avantageusement des matériaux constituant les tubes à couper.

Avantageusement, la roulette de coupe 9 se présente, dans le cas de tubes en cuivre rouge par exemple, sous forme d'un disque mince dont la périphérie est traitée de manière adéquate pour l'usage considéré.

La roulette de chanfreinage 7, par contre, présente, en section, une forme affectant globalement la forme d'un double biseau. Avantageusement, la périphérie de cette roulette est chanfreinée, sur les deux faces, selon un angle compris entre 30 et 60°, de préférence selon un angle de 45°.

- 4 -

Le coupe-tube selon la présente invention convient bien pour couper des tubes creux en matériaux métalliques ou synthétiques relativement tendres, tels que des tubes en acier doux, en cuivre ou en matière plastique rigide; ou encore, le coupe-tube étant muni de roulettes appropriées, peut également couper des tubes creux en matériaux métalliques plus durs.

- 5 -

REVENDICATIONS

1. Coupe-tube consistant en un support (1) qui comporte deux appuis sensiblement opposés (3,5), à écartement réglable, caractérisé en ce que le premier appui (3) est muni d'une roulette de chanfreinage (7) et d'une roulette de coupe (9), les deux roulettes étant disposées l'une en-dessous de l'autre, et en ce que le deuxième appui (5) est muni d'un ou de deux galets d'appui parallèles (11,13) dont les axes sont substantiellement parallèles aux axes des roulettes de chanfreinage et de coupe (7,9).

2. Coupe-tube selon la revendication 1, caractérisé en ce que les roulettes de chanfreinage (7) et de coupe (9) sont montées sur un même étrier (25) assemblé de manière pivotante avec ledit premier appui (3).

3. Coupe-tube selon l'une quelconque des revendications 1 et 2, caractérisé en ce que le premier appui (3) est fixe et fait partie intégrante du support (1), tandis que le deuxième appui (5) est mobile.

4. Coupe-tube selon l'une quelconque des revendications 1 à 3, caractérisé en ce qu'il consiste en un support affectant globalement la forme d'un U (1), dont une branche forme le premier appui (3) fixe et dont l'autre branche comporte un taraudage (17) recevant une tige filetée (15) commandant l'écartement entre l'appui (3) et l'appui mobile (5).

5. Coupe-tube selon l'une quelconque des revendications 1 à 4, caractérisé en ce que l'appui mobile (5) est guidé dans une rainure (23) pratiquée dans le support (1) en forme de U.

6. Tubes coupés et chanfreinés réalisés au moyen des coupes selon l'une quelconque des revendications 1 à 5.

0154616